# EUROPEAN PATENT APPLICATION

(11) **EP 4 513 922 A1**
(43) Date of publication of application: **26.02.2025**
(21) Application number: 23802653.8
(22) Date of filing: 25.04.2023
(51) Int. Cl.: H04W 12/03, H04W 12/06

(54) **COMMUNICATION METHOD AND APPARATUS**

(30) Priority: 12.05.2022 CN 202210514836
(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN); WANG, Donghui, Shenzhen, Guangdong 518129 (CN); XI, Yan, Shenzhen, Guangdong 518129 (CN); ZHAO, Mingyu, Shenzhen, Guangdong 518129 (CN); YAN, Xueqiang, Shenzhen, Guangdong 518129 (CN)
(74) Representative: Isarpatent
(86) International application number: PCT/CN2023/090692
(87) International publication number: WO 2023/216879

(57) **Abstract**

Embodiments of this application provide a communication method and apparatus. The method includes: A terminal device determines a first identifier and first domain information, where the first identifier includes an encrypted identifier of the terminal device, and the first domain information indicates a domain in which a network element that manages data information of the terminal device is located. The terminal device sends the first identifier and the first domain information to a first network element. In this way, when an identifier of the terminal device is anonymized or changes frequently, a node that manages the data information of the terminal device and that corresponds to the identifier of the terminal device can be accurately found, to reduce network overheads.

## Description

This application claims priority to Chinese Patent Application No. 202210514836.8, filed with the China National Intellectual Property Administration on May 12, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

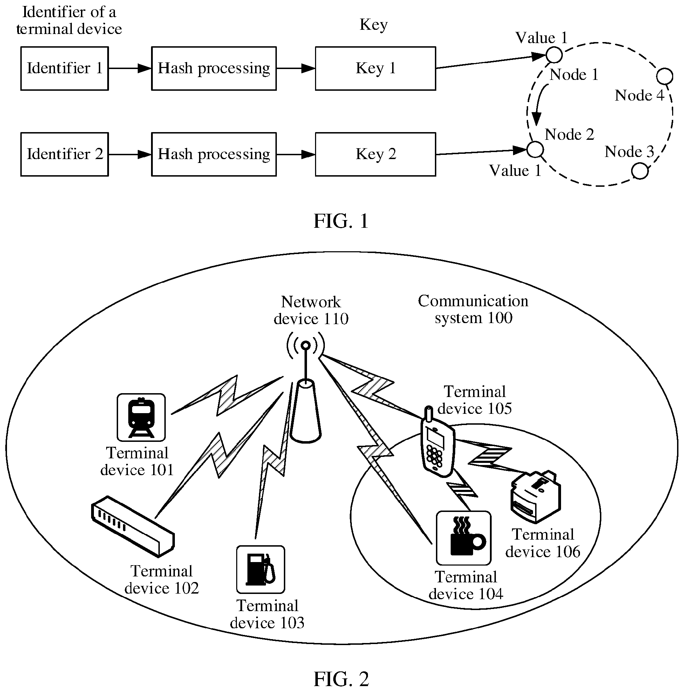

In a distributed system, data of a user may be processed or stored by a distributed node. For example, in a distributed system implemented based on a distributed hash table (distributed hash table, DHT), a node performs addressing and maintenance on the data based on (key, value), that is, (key, value). The key may be understood as an index of the value (value). A specific operation performed by the node on the data is shown in FIG. 1. For example, if a unified data management (unified data management, UDM) needs to store subscription information of a terminal device, the UDM may perform hash processing on an identifier of the terminal device, to obtain a corresponding key (key). Then, based on a deployment status of the distributed system, the subscription information of the terminal device corresponding to the key (key) is stored on a corresponding distributed node. A ring formed by storage nodes may be referred to as a DHT ring.

However, when the identifier of the terminal device changes, distributed storage is affected. A processing node searches for a storage node by using the identifier of the terminal device, in other words, performs hash processing on the identifier of the terminal device, to obtain a key (key), and then searches for a corresponding storage node based on the key (key). The identifier of the terminal device may need to change frequently. For example, (periodical) anonymization processing or periodical update needs to be performed on the identifier of the terminal device. When the identifier of the terminal device changes (for example, periodically changes), a key corresponding to a changed identifier of the terminal device also changes. Due to a limitation on a quantity of nodes, a change of the key may cause mapping to an original node or a different node. For example, as shown in FIG. 1, the processing node performs hash processing on an anonymized identifier, namely, an identifier 1, of the terminal device, to obtain a key 1, searches for a corresponding storage node, namely, a node 1, based on the key 1, and then stores a value 1 corresponding to the key 1 on the node 1. However, when the anonymized identifier of the terminal device changes from the identifier 1 to an identifier 2, the processing node performs hash processing on the identifier 2, to obtain a key 2, searches for a corresponding storage node, namely, a node 2, based on the key 2, and then stores the value 1 corresponding to the key 2 on the node 2. The identifier 1 and the identifier 2 correspond to a same identifier of the terminal device. Therefore, data of the terminal device is also the same, in other words, the data is the value 1. To enable an externally executing node to find corresponding data based on same logic, data of the value 1 stored on the node 1 needs to be stored on the node 2, in other words, the node 2 needs to copy the value on the node 1 to the node 2. This manner increases complexity. In addition, when an identity of the user (the identifier of the terminal device) is anonymized or changes frequently, a data processing (or storage) node corresponding to the user cannot be accurately found.

### SUMMARY

Embodiments of this application disclose a communication method and apparatus, so that when an identifier of a terminal device is anonymized or changes frequently, a node that manages data information of the terminal device and that corresponds to the identifier of the terminal device can be accurately found, to reduce network overheads.

A first aspect of embodiments of this application discloses a communication method, including: A terminal device determines a first identifier and first domain information, where the first identifier includes an encrypted identifier of the terminal device, and the first domain information indicates a domain in which a network element that manages data information of the terminal device is located. The terminal device sends the first identifier and the first domain information to a first network element.

In the foregoing method, the terminal device sends the first identifier and the first domain information to the first network element, so that the first network element can determine a second network element based on the first domain information, and send the first identifier to the second network element. Correspondingly, the second network element receives the first identifier from the first network element, and decrypts the first identifier, to obtain the second identifier, determine a third network element based on the second identifier, and obtain the data information of the terminal device from the third network element, in other words, determine the data information of the terminal device based on the second identifier, namely, an unencrypted identifier of the terminal device. Alternatively, the terminal device sends the first identifier and the first domain information to the first network element, so that the first network element can perform hash processing on the first domain information, to determine a second network element, and then send the first identifier to the second network element. Correspondingly, the second network element determines a second identifier based on the first identifier, to determine the data information of the terminal device, in other words, determine the data information of the terminal device based on the second identifier, namely, an unencrypted identifier of the terminal device. The foregoing manner can avoid a case in which a network element that manages the data information of the terminal device cannot be accurately determined based on a changed identifier of the terminal device when an identifier of the terminal device changes frequently.

In a possible implementation, the first domain information is carried in a field of the first identifier.

In another possible implementation, the first domain information corresponds to a group to which the terminal device belongs.

In another possible implementation, that a terminal device determines a first identifier includes: The terminal device obtains encryption information. The terminal device encrypts an identifier of the terminal device based on the encryption information, to determine the first identifier.

In another possible implementation, that a terminal device determines a first identifier and first domain information includes: The terminal device receives the first identifier and/or the first domain information.

In another possible implementation, the first identifier further explicitly includes an identifier of a third network element, or further implicitly includes an identifier that is of a third network element and that is determined based on a mapping relationship between the identifier of the terminal device and the identifier of the third network element.

In another possible implementation, the network element that manages the data information of the terminal device is a second network element.

A second aspect of embodiments of this application discloses a communication method, including: A second network element receives a first identifier, where the first identifier includes an encrypted identifier of a terminal device. The second network element determines a third network element based on a second identifier, where the second identifier is obtained by decrypting the first identifier, and the third network element is configured to determine data information of the terminal device corresponding to the second identifier.

In the foregoing method, a first network element determines the second network element based on first domain information, and sends the first identifier to the second network element. Correspondingly, the second network element receives the first identifier from the first network element, and decrypts the first identifier, to obtain the second identifier, determine the third network element based on the second identifier, and obtain the data information of the terminal device from the third network element, in other words, determine the data information of the terminal device based on the second identifier, namely, an unencrypted identifier of the terminal device. This avoids a case in which a network element that manages the data information of the terminal device cannot be accurately determined based on a changed identifier of the terminal device when an identifier of the terminal device changes frequently.

In a possible implementation, the first identifier further explicitly includes an identifier of the third network element, or further implicitly includes an identifier that is of the third network element and that is determined based on a mapping relationship between an identifier of the terminal device and the identifier of the third network element.

In the foregoing method, the first identifier further explicitly includes the identifier of the third network element, or further implicitly includes the identifier that is of the third network element and that is determined based on the mapping relationship between the identifier of the terminal device and the identifier of the third network element, so that the second network element can accurately determine the third network element, to reduce network overheads.

In another possible implementation, that the second network element determines a third network element based on a second identifier includes: The second network element determines related information of the third network element based on the second identifier, where the related information of the third network element includes address information of the third network element or identification information of the third network element. The second network element sends a first message to a first network element, where the first message includes the related information of the third network element, and the related information of the third network element is for determining the third network element.

In another possible implementation, the method further includes: The second network element sends a second message to the third network element, where the second message is for sending an access request of the terminal device or a request for obtaining the data information of the terminal device.

In another possible implementation, when the second network element and the third network element belong to a same domain, the second network element and the third network element share decryption information of a user identifier.

In the foregoing method, a manner in which the second network element and the third network element share a decryption method of the user identifier can avoid extra data overheads caused because encryption and decryption of the identifier of the terminal device are completed by a same network element and a network element that manages the data information that is of the terminal device and that corresponds to the identifier of the terminal device may need to be changed when the identifier of the terminal device changes, thereby reducing network overheads.

A third aspect of embodiments of this application discloses a communication method, including: A first network element receives a first identifier and first domain information, where the first identifier includes an encrypted identifier of a terminal device, and the first domain information indicates a domain in which a network element that manages data information of the terminal device is located. The first network element sends the first identifier to a second network element.

In the foregoing method, after the first network element receives the first identifier and the first domain information, the first network element can determine the second network element based on the first domain information, and send the first identifier to the second network element. Correspondingly, the second network element receives the first identifier from the first network element, and decrypts the first identifier, to obtain the second identifier, determine a third network element based on the second identifier, and obtain the data information of the terminal device from the third network element, in other words, determine the data information of the terminal device based on the second identifier, namely, an unencrypted identifier of the terminal device. Alternatively, after the first network element receives the first identifier and the first domain information, the first network element can perform hash processing on the first domain information, to determine the second network element, and then send the first identifier to the second network element. Correspondingly, the second network element determines a second identifier based on the first identifier, to determine the data information of the terminal device, in other words, determine the data information of the terminal device based on the second identifier, namely, an unencrypted identifier of the terminal device. The foregoing manner can avoid a case in which a network element that manages the data information of the terminal device cannot be accurately determined based on a changed identifier of the terminal device when an identifier of the terminal device changes frequently.

In another possible implementation, the first domain information is carried in a field of the first identifier.

In another possible implementation, the first domain information corresponds to a group to which the terminal device belongs.

In another possible implementation, the first domain information includes identification information or address information of the domain in which the network element that manages the data information of the terminal device is located.

In another possible implementation, the first identifier further explicitly includes an identifier of a third network element, or further implicitly includes an identifier that is of a third network element and that is determined based on a mapping relationship between an identifier of the terminal device and the identifier of the third network element.

In the foregoing method, the first identifier further explicitly includes the identifier of the third network element, or further implicitly includes the identifier that is of the third network element and that is determined based on the mapping relationship between the identifier of the terminal device and the identifier of the third network element, so that the second network element can accurately determine the third network element, to reduce network overheads.

In another possible implementation, the method further includes: The first network element receives a first message from the second network element, where the first message includes related information of the third network element, and the related information of the third network element includes address information of the third network element or identification information of the third network element. The first network element sends a second message to the third network element based on the first message, where the second message is for sending an access request of the terminal device or a request for obtaining the data information of the terminal device.

In another possible implementation, the network element that manages the data information of the terminal device is the second network element.

In another possible implementation, the method further includes: The first network element performs hash processing on the first domain information, to determine the second network element.

In the foregoing method, this manner can avoid a case in which a network element that manages the data information of the terminal device cannot be accurately determined based on a changed identifier of the terminal device when the identifier of the terminal device changes frequently. Correspondingly, the second network element can be determined based on the first domain information. To be specific, when the identifier of the terminal device changes frequently, the network element that manages the data information of the terminal device can be accurately determined based on the changed identifier of the terminal device.

In another possible implementation, that a first network element receives a first identifier and first domain information includes: The first network element receives the first identifier and the first domain information from the terminal device.

In another possible implementation, the method further includes: The first network element receives the data information of the terminal device from the second network element.

In another possible implementation, the method further includes: The first network element sends a third message to the terminal device, where the third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

In the foregoing method, in a manner in which the first network element sends the third message to the terminal device, the terminal device can perform communication based on the fourth identifier and the second domain information, thereby avoiding a case in which a network element that manages the data information of the terminal device cannot be accurately determined based on a changed identifier of the terminal device when the identifier of the terminal device changes frequently.

In another possible implementation, the method further includes: The first network element sends a fourth message to the terminal device, where the fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

In the foregoing method, in a manner in which the first network element sends the fourth message to the terminal device, the terminal device can perform communication based on the fourth identifier and the second domain information, thereby avoiding a case in which a network element that manages the data information of the terminal device cannot be accurately determined based on a changed identifier of the terminal device when the identifier of the terminal device changes frequently.

A fourth aspect of embodiments of this application discloses a communication apparatus. The communication apparatus may be a terminal device or a chip in the terminal device, and includes a communication unit and a processing unit. The processing unit is configured to determine a first identifier and first domain information, where the first identifier includes an encrypted identifier of a terminal device, and the first domain information indicates a domain in which a network element that manages data information of the terminal device is located. The communication unit is configured to send the first identifier and the first domain information to a first network element.

In a possible implementation, the first domain information is carried in a field of the first identifier.

In another possible implementation, the first domain information corresponds to a group to which the apparatus belongs.

In another possible implementation, the processing unit is configured to obtain encryption information; and the processing unit is configured to encrypt an identifier of the terminal device based on the encryption information, to determine the first identifier.

In another possible implementation, the communication unit is configured to receive the first identifier and/or the first domain information.

In another possible implementation, the first identifier further explicitly includes an identifier of a third network element, or further implicitly includes an identifier that is of a third network element and that is determined based on a mapping relationship between the identifier of the terminal device and the identifier of the third network element.

In another possible implementation, the network element that manages the data information of the terminal device is a second network element.

For technical effects brought by the fourth aspect or the possible implementations, refer to the descriptions of the technical effects brought by the first aspect or the corresponding implementations.

A fifth aspect of embodiments of this application discloses a communication apparatus. The communication apparatus may be a second network element or a chip in the second network element, and includes a communication unit and a processing unit. The communication unit is configured to receive a first identifier, where the first identifier includes an encrypted identifier of a terminal device. The processing unit is configured to determine a third network element based on a second identifier, where the second identifier is obtained by decrypting the first identifier, and the third network element is configured to determine data information of the terminal device corresponding to the second identifier.

In a possible implementation, the first identifier further explicitly includes an identifier of the third network element, or further implicitly includes an identifier that is of the third network element and that is determined based on a mapping relationship between an identifier of the terminal device and the identifier of the third network element.

In another possible implementation, the processing unit is configured to determine related information of the third network element based on the second identifier, where the related information of the third network element includes address information of the third network element or identification information of the third network element. The communication unit is configured to send a first message to a first network element, where the first message includes the related information of the third network element, and the related information of the third network element is for determining the third network element.

In another possible implementation, the communication unit is further configured to send a second message to the third network element, where the second message is for sending an access request of the terminal device or a request for obtaining the data information of the terminal device.

In another possible implementation, when the apparatus and the third network element belong to a same domain, the apparatus and the third network element share decryption information of a user identifier.

For technical effects brought by the fifth aspect or the possible implementations, refer to the descriptions of the technical effects brought by the second aspect or the corresponding implementations.

A sixth aspect of embodiments of this application discloses a communication apparatus. The communication apparatus may be a first network element or a chip in the first network element, and includes a communication unit and a processing unit. The communication unit is configured to receive a first identifier and first domain information, where the first identifier includes an encrypted identifier of a terminal device, and the first domain information indicates a domain in which a network element that manages data information of the terminal device is located. The communication unit is configured to send the first identifier to a second network element.

In a possible implementation, the first domain information is carried in a field of the first identifier.

In another possible implementation, the first domain information corresponds to a group to which the terminal device belongs.

In another possible implementation, the first domain information includes identification information or address information of the domain in which the network element that manages the data information of the terminal device is located.

In another possible implementation, the first identifier further explicitly includes an identifier of a third network element, or further implicitly includes an identifier that is of a third network element and that is determined based on a mapping relationship between an identifier of the terminal device and the identifier of the third network element.

In another possible implementation, the communication unit is further configured to receive a first message from the second network element, where the first message includes related information of the third network element, and the related information of the third network element includes address information of the third network element or identification information of the third network element. The communication unit is further configured to send a second message to the third network element based on the first message, where the second message is for sending an access request of the terminal device or a request for obtaining the data information of the terminal device.

In another possible implementation, the network element that manages the data information of the terminal device is the second network element.

In another possible implementation, the processing unit is further configured to perform hash processing on the first domain information, to determine the second network element.

In another possible implementation, the communication unit is configured to receive the first identifier and the first domain information from the terminal device.

In another possible implementation, the communication unit is further configured to receive the data information of the terminal device from the second network element.

In another possible implementation, the communication unit is further configured to send a third message to the terminal device, where the third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

In another possible implementation, the communication unit is further configured to send a fourth message to the terminal device, where the fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

For technical effects brought by the sixth aspect or the possible implementations, refer to the descriptions of the technical effects brought by the third aspect or the corresponding implementations.

A seventh aspect of embodiments of this application discloses a communication apparatus. The communication apparatus may be a terminal device or a chip in the terminal device. The communication apparatus includes a processor and an interface circuit. Optionally, the communication apparatus further includes a memory. Optionally, the processor and the memory may be integrated together. The interface circuit is configured to receive a signal from another apparatus other than the apparatus and transmit the signal to the processor, or send a signal from the processor to another apparatus other than the apparatus. The processor is configured to perform the method described in the first aspect or the possible implementations of the first aspect by using a logic circuit or executing code instructions.

An eighth aspect of embodiments of this application discloses a communication apparatus. The communication apparatus may be a second network element or a chip in the second network element. The communication apparatus includes a processor and an interface circuit. Optionally, the communication apparatus further includes a memory. Optionally, the processor and the memory may be integrated together. The interface circuit is configured to receive a signal from another apparatus other than the apparatus and transmit the signal to the processor, or send a signal from the processor to another apparatus other than the apparatus. The processor is configured to perform the method described in the second aspect or the possible implementations of the second aspect by using a logic circuit or executing code instructions.

A ninth aspect of embodiments of this application discloses a communication apparatus. The communication apparatus may be a first network element or a chip in the first network element. The communication apparatus includes a processor and an interface circuit. Optionally, the communication apparatus further includes a memory. Optionally, the processor and the memory may be integrated together. The interface circuit is configured to receive a signal from another apparatus other than the apparatus and transmit the signal to the processor, or send a signal from the processor to another apparatus other than the apparatus. The processor is configured to perform the method described in the third aspect or the possible implementations of the third aspect by using a logic circuit or executing code instructions.

A tenth aspect of embodiments of this application discloses a chip system. The chip system includes at least one processor and a communication interface. The at least one processor is configured to execute a computer program or instructions, to implement the method in any one of the foregoing aspects.

An eleventh aspect of embodiments of this application discloses a computer-readable storage medium. The computer-readable storage medium stores computer instructions. When the computer instructions are run on a processor, the method in any one of the foregoing aspects is implemented.

A twelfth aspect of embodiments of this application discloses a computer program product. The computer program product includes computer program code. When the computer program code is run on a computer, the method in any one of the foregoing aspects is implemented.

A thirteenth aspect of embodiments of this application discloses a communication system. The system includes: the apparatus in the first aspect, the apparatus in the second aspect, and the apparatus in the third aspect; or the apparatus in the first aspect and the apparatus in the third aspect.

### BRIEF DESCRIPTION OF DRAWINGS

The following describes the accompanying drawings used in embodiments of this application.
FIG. 1 is a diagram of a data processing process of a distributed system node according to an embodiment of this application;
FIG. 2 is a diagram of a structure of a communication system 100 according to an embodiment of this application;
FIG. 3 is a diagram of a user-centric network architecture according to an embodiment of this application;
FIG. 4 is a diagram of a process in which a terminal device initially accesses a network according to an embodiment of this application;
FIG. 5 is a diagram of an encryption and decryption process of an identifier of a terminal device according to an embodiment of this application;
FIG. 6 is a diagram of a communication method according to an embodiment of this application;
FIG. 7 is a diagram of formats of a first identifier and first domain information according to an embodiment of this application;
FIG. 8 to FIG. 13 are diagrams of communication methods according to embodiments of this application;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

The following describes embodiments of this application with reference to the accompanying drawings in embodiments of this application.

FIG. 2 is a diagram of a structure of a communication system 100 according to an embodiment of the present invention. The communication system 100 may include a network device 110, a terminal device 101, a terminal device 102, a terminal device 103, a terminal device 104, a terminal device 105, and a terminal device 106. It should be understood that the communication system 100 to which a method in embodiments of this application is applicable may include more or fewer network devices or terminal devices. The network device and the terminal device may be hardware, may be software obtained through functional division, or may be a combination thereof. The network device and the terminal device may communicate with each other via another device or network element. In the communication system, the network device 110 may transmit data with a plurality of terminal devices. In other words, the network device 110 sends downlink data to the terminal device 101 to the terminal device 106. Certainly, the terminal device 101 to the terminal device 106 may send uplink data to the network device 110. In addition, the terminal device 104, the terminal device 105, and the terminal device 106 may alternatively form a communication system. In the communication system, the network device 110 may send downlink data to the terminal device 101, the terminal device 102, and the terminal device 105. Then, the terminal device 105 sends the downlink data to the terminal device 104 or the terminal device 106. The method in embodiments of this application may be used in the communication system 100 shown in FIG. 1. The network device 110 may be any network device described below as an example. The terminal device 101 to the terminal device 106 may be any terminal devices described below as an example.
(1) The terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device communication (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), an uncrewed aerial vehicle device, or the like. For example, the terminal device may include a mobile phone (also referred to as a "cellular" phone), a computer having a mobile terminal device, or a portable, pocket-sized, handheld, or computer-embedded mobile apparatus, for example, the terminal device is a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example but not limitation, in embodiments of this application, the terminal device may alternatively be a wearable device. The wearable device may also be referred to as a wearable intelligent device, an intelligent wearable device, or the like, and is a general term of wearable devices, for example, glasses, gloves, watches, clothes, and shoes, that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices, for example, smart watches or smart glasses, that can implement all or some of functions without depending on smartphones, and include devices, for example, various smart bands, smart helmets, or smart jewelry for monitoring physical signs, that focus on only one type of application functions and need to collaboratively work with other devices such as smartphones.

If the various terminal devices described above are located in a vehicle (for example, placed in the vehicle or mounted in the vehicle), the terminal devices may all be considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood as that any device that can perform data communication with a base station may be considered as the terminal device.

(2) The network device may further include an access network (access network, AN) device, for example, an uncrewed aerial vehicle device, a satellite, or a base station (for example, an access point), and may be a device that communicates with a wireless terminal device through an air interface in one or more cells in an access network. Alternatively, the network device is, for example, a roadside unit (roadside unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (5th generation, 5G) mobile communication technology NR system (which also referred to as an NR system for short), or may include a central unit (central unit, CU) and a distributed unit (distributed unit, DU) in a cloud radio access network (cloud radio access network, Cloud RAN) system. This is not limited in embodiments of this application.

(3) The network device may further include a core network device. The core network device includes, for example, an access and mobility management function (access and mobility management function, AMF) network element, a session management function (session management function, SMF) network element, or a unified data management (unified data management, UDM) network element.

The AMF network element is mainly responsible for an access management (access management, AM) network element and a mobility management (mobility management, MM) network element of the terminal device.

The SMF network element is mainly responsible for providing quality of service (quality of service, QoS) flow binding for a session of the terminal device, in other words, performing service differentiation based on a data network name (data network name, DNN) corresponding to the session of the terminal device.

The UDM network element is mainly responsible for user subscription data management, user identifier management, and the like.

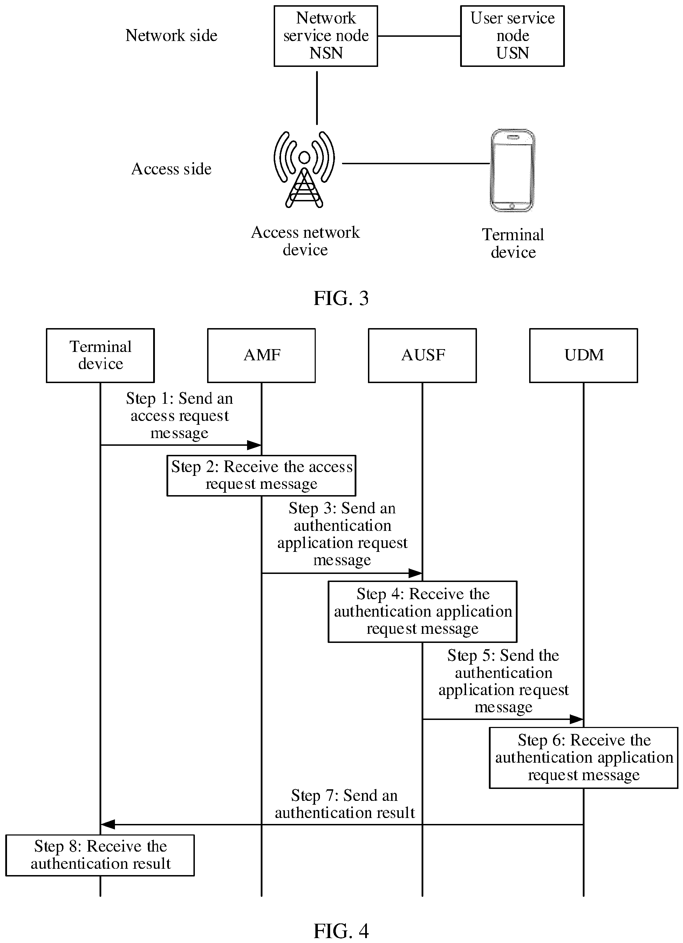

FIG. 3 is a diagram of a user-centric network (user-centric network, UCN) architecture. A core network device includes, for example, a network service node (network service node, NSN) or a user service node (user service node, USN) in the UCN architecture.

The NSN is mainly responsible for connecting a base station to another network element in a core network, authentication on an accessing terminal device, establishment of the USN, and life cycle management.

The USN is a core network element that provides a dedicated service for a terminal device. For example, the USN may integrate functions of session management (session management, SM) and/or policy management (policy management, PM). Alternatively, the USN may be understood as a digital twin function of the terminal device in a core network, and is a digital model of real behavior of the terminal device, for example, functions of recording a location of the terminal device and used service information, and artificial intelligence (artificial intelligence, AI) processing. Alternatively, the USN may be understood as being similar to a cloud server (cloud computer). The terminal device may orchestrate, on the cloud server, resources provided by an operator, for example, QoS setting and bandwidth allocation of different services.

It should be understood that the NSN and the USN may have other names, or may be other communication devices having same functions. This is not limited in this application. For example, the NSN may be a network element having an access management function or a service proxy function, and the USN may be a network element having a terminal digital twin function.

First, some terms in this application are explained and described, to facilitate understanding by a person skilled in the art.
(1) An identifier of a terminal device includes a subscription permanent identifier (subscription permanent identifier, SUPI), a subscription concealed identifier (subscription concealed identifier, SUCI), a globally unique temporary identifier (globally unique temporary identifier, GUTI), and the like.

The SUPI is a permanent identifier of the terminal device in a network, and is generated when the terminal device is registered with an operator. The SUPI is used to identify the terminal device between core network elements.

An SUPI* is obtained by encrypting the SUPI by using a preconfigured encryption method, or may be understood as being obtained by anonymizing the SUPI by using a preconfigured anonymization method.

The SUCI is used as an encrypted identifier (an encrypted identifier of the SUPI) used by the terminal device to perform communication through an air interface (in other words, with a base station) during initial access, registration update, or the like, so that protection of the identifier of the terminal device is improved in a wireless communication process.

The GUTI is a temporary identifier allocated by an access network element to the terminal device. After the terminal device accesses a network by using the SUCI, the access network element allocates the temporary identifier to the terminal device, and the temporary identifier is used by the terminal device to subsequently communicate with the access network element via a base station.

A GUTI* is obtained by encrypting the GUTI by using a preconfigured encryption method, or may be understood as being obtained by anonymizing the GUTI by using a preconfigured anonymization method.

(2) A process in which a terminal device initially accesses a network is shown in FIG. 4, and is specifically as follows:
Step 1: The terminal device sends an access request message to an AMF.

The access request message includes an SUCI or a GUTI. When the terminal device needs to initially access the network (for example, register with the network, or initiate a service request to the network), the terminal device sends the access request message to a base station, and the base station forwards the access request message to the AMF.

Step 2: The AMF receives the access request message from the terminal device.

After receiving the access request message of the terminal device, the AMF determines whether the access request message includes the SUCI or the GUTI. If the access request message includes the GUTI, a corresponding SUPI needs to be matched based on the GUTI. If the access request message includes the SUCI, decryption is not performed.

Step 3: The AMF sends an authentication application request message to an authentication server function AUSF network element.

The authentication application request message includes an SUCI or an SUPI, and may further include network service information (SN-Name). The SN-Name is used by the authentication server function (authentication server function, AUSF) network element to invoke an authentication algorithm to generate an authentication vector.

Step 4: The AUSF receives the authentication application request message from the AMF.

After receiving the authentication application request message from the AMF, the AUSF determines, based on the SN-Name in the authentication application request message, whether the terminal device falls within a network service scope, and stores network service information required by the terminal device.

Step 5: The AUSF sends the authentication application request message to a UDM.

The authentication application request message includes the SUCI or the SUPI, and may further include the network service information (SN-Name).

Step 6: The UDM receives the authentication application request message from the AUSF.

If the authentication application request message includes the SUCI, the UDM invokes a subscription identifier de-concealing function (subscription identifier de-concealing function, SIDF) to decrypt the SUCI to obtain the SUPI, then configures, by using the SUPI, an authentication algorithm correspondingly required by the terminal device, and extracts a corresponding authentication key and an authentication result based on an authentication manner of the terminal device.

Step 7: The UDM sends the authentication result to the terminal device.

Step 8: The terminal device receives the authentication result from the UDM.

A universal subscriber identity module (universal subscriber identity module, USIM) in the terminal device checks authenticity of the authentication result.

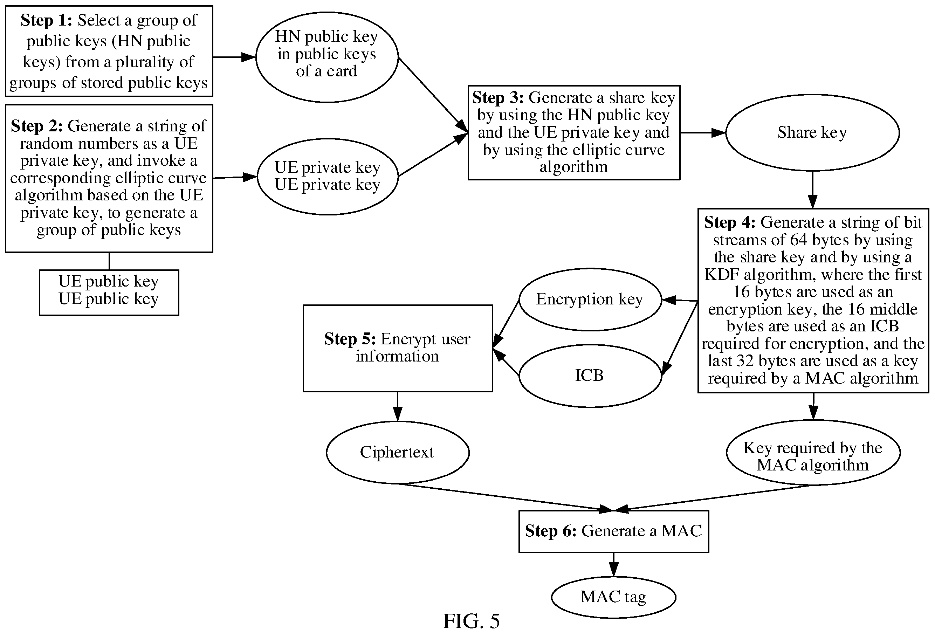

(3) A process of encrypting and decrypting an identifier of a terminal device is shown in FIG. 5, and is specifically as follows: A principle of encryption is mainly based on key exchange of an elliptic curve algorithm: UE public key (public key of the terminal device, known to a network)*HN private key (private key of the network, unknown to the terminal device)=share key=UE private key (private key of the terminal device, generated by the terminal device, and unknown to the network)*HN public key (public key of the network, known to the terminal device). Because share keys generated by the terminal device and a network device are the same, an encryption key derived by using a key derivation function (key derivation function, KDF) and a key (key) required by an initial counter block (initial counter block, ICB) and a message authentication code (message authentication code, MAC) algorithm are also the same, so that encryption and decryption and MAC generation/verification can be performed by using a symmetric encryption algorithm.

In a distributed network architecture, when the identifier of the terminal device changes, distributed storage is affected. A processing node searches for a storage node by using the identifier of the terminal device, in other words, performs hash processing on the identifier of the terminal device, to obtain a key (key), and then searches for a corresponding storage node based on the key (key). When the identifier of the terminal device changes (for example, periodically changes), a key corresponding to a changed identifier of the terminal device also changes. Due to a limitation on a quantity of nodes, a change of the key may cause mapping to an original node or a different node. For example, as shown in FIG. 1, the processing node performs hash processing on an anonymized identifier, namely, an identifier 1, of the terminal device, to obtain a key 1, searches for a corresponding storage node, namely, a node 1, based on the key 1, and then stores a value 1 corresponding to the key 1 on the node 1. However, when the anonymized identifier of the terminal device changes from the identifier 1 to an identifier 2, the processing node performs hash processing on the identifier 2, to obtain a key 2, searches for a corresponding storage node, namely, a node 2, based on the key 2, and then stores the value 1 corresponding to the key 2 on the node 2. The identifier 1 and the identifier 2 correspond to a same identifier of the terminal device. Therefore, data of the terminal device is also the same, in other words, the data is the value 1. To enable an externally executing node to find corresponding data based on same logic, data of the value 1 stored on the node 1 needs to be stored on the node 2, in other words, the node 2 needs to copy the value on the node 1 to the node 2. This increases complexity. In addition, when an identity of a user (the identifier of the terminal device) is anonymized or changes frequently, a data processing (or storage) node corresponding to the user cannot be accurately found. Therefore, to resolve the foregoing problem, embodiments of this application provide the following solutions.

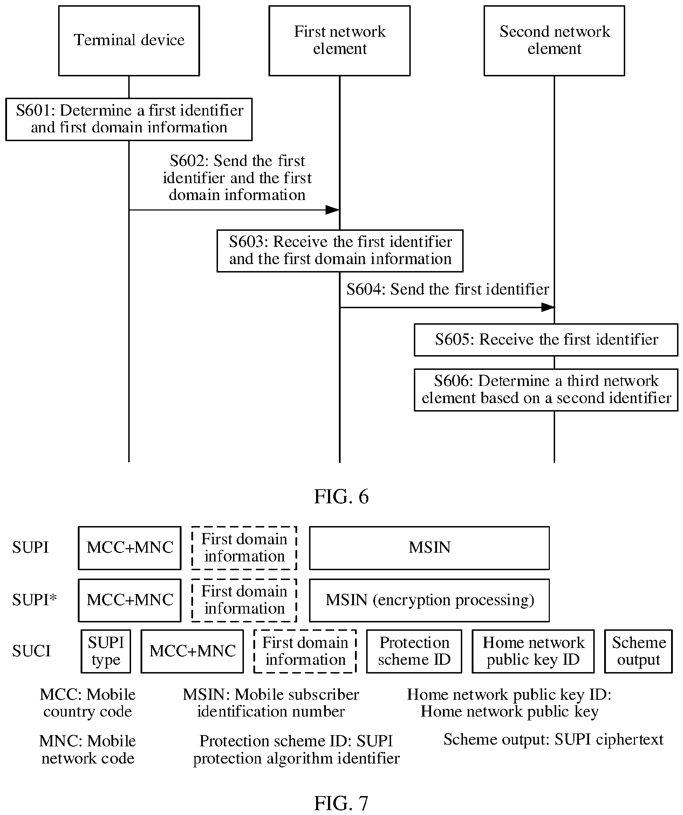

FIG. 6 shows a communication method according to an embodiment of this application. The method includes but is not limited to the following steps.

Step S601: A terminal device determines a first identifier and first domain information.

Specifically, the first identifier includes an encrypted identifier of the terminal device, and the first domain information indicates a domain in which a network element that manages data information of the terminal device is located. Formats of the first identifier and the first domain information are shown in FIG. 7. When an identifier of the terminal device is an SUPI, the first identifier may be an SUPI* correspondingly. When an identifier of the terminal device is a GUTI, the first identifier may be a GUTI* correspondingly. When an identifier of the terminal device is an SUPI, the first identifier may alternatively be an SUCI correspondingly. In this embodiment of this application, the encrypted identifier of the terminal device may be understood as an identifier obtained through anonymization, and the identifier of the terminal device may also be understood as a user identifier. This is not limited in embodiments of this application.

Specifically, the first domain information may include identification information or address information of the domain in which the network element that manages the data information of the terminal device is located. The domain in which the network element that manages the data information of the terminal device is located may be a UDM domain or a USN domain. There may be one or more network elements that manage the data information of the terminal device. The network element that manages the data information of the terminal device may be a USN, a UDM network element, a unified data repository (unified data repository, UDR) function network element, a policy control function (policy control function, PCF) network element, or another core network element. This is not limited herein. In an example, the first domain information is identification information of a domain, for example, a domain 1, where the domain 1 includes a network element 1 and a network element 2, and the network element 1 and the network element 2 are network elements that manage the data information of the terminal device. The first domain information may be related to a geographical location. In an example, if the first domain information includes Shanghai, Shanghai is a domain, and the domain includes a network element that manages the data information of the terminal device; and if the first domain information includes Chengdu, Chengdu is a domain, and the domain includes a network element that manages the data information of the terminal device.

The first domain information may include identification information of the network element that manages the data information of the terminal device, for example, identification information of the USN or identification information of the UDM network element, and/or the first domain information corresponds to a group to which the terminal device belongs. For example, when an SUPI is initially allocated to the UDM, the UDM associates a value of a domain with a group to which a terminal device corresponding to the SUPI belongs.

Specifically, the terminal device determines the first identifier and the first domain information in the following two manners. In a first manner, the terminal device obtains encryption information, and encrypts the identifier of the terminal device based on the encryption information, to determine the first identifier. Optionally, the terminal device obtains the first domain information. In other words, it may be understood as that the terminal device receives the encryption information and the first domain information from the UDM network element, and encrypts the identifier of the terminal device based on the encryption information, to determine the first identifier. In this embodiment of this application, the encryption information may be understood as an encryption method, and encryption may be understood as anonymization. This is not limited in embodiments of this application. In a second manner, the terminal device receives the first identifier and/or the first domain information. Optionally, the terminal device may receive the first identifier and the first domain information from the UDM network element. To be specific, the UDM network element encrypts the identifier of the terminal device based on preconfigured encryption information or encryption information obtained from another network element, to obtain the first identifier, and then sends the first identifier and the first domain information to the terminal device.

The UDM network element determines the first identifier in two manners. In a first manner, the identifier of the terminal device may be configured by a management plane function, for example, a business support system (business support system, BSS), for the UDM network element, and the encryption information may be configured by the BSS or an operator for the UDM network element. Correspondingly, the UDM network element encrypts the identifier of the terminal device based on the encryption information, to determine the first identifier. In a second manner, the BSS sends the first identifier to the UDM network element. In other words, the first identifier is obtained by encrypting the identifier of the terminal device by the BSS.

Optionally, the first domain information may be carried in a field of the first identifier. Optionally, the first identifier and the first domain information may be carried in independent information elements.

Optionally, the first identifier and the first domain information may be carried in a non-access stratum (non-access stratum, NAS) message. Optionally, the NAS message may be an access request message (for example, a registration request message or a service request message) of the terminal device or a request message for obtaining the data information of the terminal device.

Step S602: The terminal device sends the first identifier and the first domain information to a first network element.

Step S603: The first network element receives the first identifier and the first domain information.

Optionally, the first network element may be an NSN, or a network element that performs access management or mobility management, for example, an AMF network element, another network element that processes an access message of the terminal device, a network element that provides a service for the terminal device (for example, an SMF network element that provides session management for the terminal), or a network element that provides a proxy service for another network element. The first network element may receive the first identifier and the first domain information from the terminal device, or the first network element receives the first identifier and the first domain information from another network element.

Step S604: The first network element sends the first identifier to a second network element.

Specifically, before the first network element sends the first identifier to the second network element, the first network element determines the second network element based on the first domain information. The first network element may determine the second network element based on the first domain information in the following manner: An identifier or address information of a network element corresponding to identification information of a domain is preconfigured in the first network element. The network element corresponding to the identification information of the domain may be a USN, and one domain may correspond to one or more network elements. For example, when the identifier of the network element corresponding to the identification information of the domain is preconfigured in the first network element, as shown in Table 1, and the identification information that is of the domain in which the network element that manages the data information of the terminal device is located and that is included in the first domain information is the domain 1, the first network element determines, based on the domain 1, that identifiers corresponding to the domain 1 are an identifier 1 and an identifier 2, and then determines the identifier 1 based on a preset rule, for example, by selecting the 1^{st} identifier, to determine that a network element corresponding to the identifier 1 is the second network element. Alternatively, the first network element may send the identifier 1 to a domain name server (domain name server, DNS), and then obtain, from the DNS, address information corresponding to the identifier 1, to determine the second network element. The first network element may alternatively send identification information of a domain, for example, the domain 1, to a management network element, for example, a network repository function (network repository function, NRF) network element, to obtain information about the second network element.

**Table 1**

| Identification information of a domain | Identifier of a network element |
|---|---|
| Domain 1 | Identifier 1 and identifier 2 |
| Domain 2 | Identifier 3 |
| Domain 3 | Identifier 4 and identifier 5 |

Step S605: The second network element receives the first identifier.

Optionally, the second network element may be a USN. When the first network element is an NSN, and the second network element is a USN, the second network element may receive the first identifier from the first network element. When the first network element and the second network element are a new network element obtained by integrating the NSN and the USN, the new network element has functions of both the NSN and the USN, and that the second network element receives the first identifier may be understood as an internal implementation in the new network element.

Step S606: The second network element determines a third network element based on a second identifier.

Specifically, the second identifier is obtained by decrypting the first identifier. The second identifier is an identifier of the terminal device, namely, an unencrypted identifier of the terminal device. For example, the first identifier includes the SUPI*, and the second network element decrypts the SUPI*, to obtain the second identifier SUPI. For example, the first identifier includes the SUCI, and the second network element decrypts the SUCI, to obtain the second identifier SUPI. For example, the first identifier includes the GUTI*, and the second network element decrypts the GUTI*, to obtain the second identifier GUTI.

Both the second network element and the third network element may be USNs. The third network element stores the data information of the terminal device, or the third network element may obtain the data information of the terminal device from another network element, for example, a network element configured to store data, for example, a UDR network element or an unstructured data storage function (unstructured data storage function, UDSF) network element.

The first identifier further explicitly includes an identifier of the third network element, or further implicitly includes an identifier that is of the third network element and that is determined based on a mapping relationship between the identifier of the terminal device and the identifier of the third network element. When the first identifier explicitly includes the identifier of the third network element, the second network element determines the third network element based on the identifier of the third network element. When the first identifier further implicitly includes the identifier that is of the third network element and that is determined based on the mapping relationship between the identifier of the terminal device and the identifier of the third network element, this may be understood as that the second network element decrypts the first identifier, to obtain the second identifier, where the second identifier is the identifier of the terminal device, namely, the unencrypted identifier of the terminal device, and then may query the identifier of the third network element from another network element based on the identifier of the terminal device, to determine the third network element. The another network element stores the mapping relationship between the identifier of the terminal device and the identifier of the third network element. For example, the another network element may be an AMF network element, an NRF network element, or another core network element.

Specifically, when the second network element and the third network element belong to a same domain, the second network element and the third network element share decryption information of a user identifier. The same domain may be a same UDM domain or a same USN domain. Sharing decryption information may mean to share a private key encrypted by a network element or another specific necessary condition for decryption. When any network element (for example, the third network element) that stores the data information of the terminal device and a network element (for example, the second network element) that receives the first identifier belong to a same domain, the second network element may decrypt the first identifier, to determine the second identifier. For example, in a distributed system, after decrypting the first identifier to obtain the second identifier, the second network element may perform hash processing on the second identifier, to obtain a corresponding key (key) value, and then determine, based on the key value, a corresponding network element that stores the data information of the terminal device, for example, the third network element.

In this embodiment of this application, the user identifier may be understood as a terminal identifier, the decryption information may be understood as a decryption method, and decryption may be understood as de-anonymization. This is not limited in embodiments of this application.

In a possible implementation, that the second network element determines the third network element based on the second identifier includes: The second network element determines related information of the third network element based on the second identifier, where the related information of the third network element includes address information of the third network element or identification information of the third network element. Then, the second network element sends a first message to the first network element, where the first message includes the related information of the third network element, and the related information of the third network element is for determining the third network element. Correspondingly, after receiving the first message from the second network element, the first network element determines the third network element based on the related information of the third network element, and then sends an access request of the terminal device or a request for obtaining the data information of the terminal device to the third network element. For example, if the first network element sends the access request of the terminal device to the third network element, the third network element may determine, based on the data information of the terminal device, for example, subscription information of the terminal device, whether to allow access of the terminal device. For example, if the first network element sends the request for obtaining the data information of the terminal device to the third network element, the third network element sends the data information of the terminal device (for example, the subscription information, context information, or policy information of the terminal device) to the first network element.

In another possible implementation, after the second network element determines the third network element based on the second identifier, the second network element sends a second message to the third network element, where the second message is for sending an access request of the terminal device or a request for obtaining the data information of the terminal device. For example, if the second network element sends the access request of the terminal device to the third network element, the third network element may determine, based on the data information of the terminal device, for example, subscription information of the terminal device, whether to allow access of the terminal device. For example, if the second network element sends the request for obtaining the data information of the terminal device to the third network element, the third network element sends the data information of the terminal device, for example, the subscription information, context information, or policy information of the terminal device, to the second network element.

In another possible implementation, optionally, if the first network element interacts with another network element, for example, the first network element is an SMF network element, the another network element is an AMF network element, and the second network element and the third network element may be UDM network elements, the terminal device sends a session establishment request message to the SMF network element via the AMF network element. The session establishment request message includes the first identifier and the first domain information. In other words, the SMF network element receives the first identifier and the first domain information from the AMF. If the SMF network element needs to obtain subscription information of the terminal device, the SMF network element sends a request message to the UDM network element. The request message includes the first identifier and the first domain information, and the request message is for obtaining the subscription information of the terminal device. After receiving the first identifier and the first domain information, the UDM network element performs step S605 and step S606. Finally, the UDM network element obtains the subscription information of the terminal device, and feeds back the subscription information of the terminal device to the SMF network element.

In another possible implementation, optionally, if the first network element interacts with another network element, for example, the first network element is an NSN or another network element that provides a proxy service, the another network element is an SMF network element, and the second network element and the third network element may be UDM network elements, the terminal device sends a session establishment request message to the SMF network element. The session establishment request message includes the first identifier and the first domain information. In other words, the SMF network element receives the first identifier and the first domain information. If the SMF network element needs to obtain subscription information of the terminal device, the SMF network element sends a request message to the NSN. The request message includes the first identifier and the first domain information, and the request message is for obtaining the subscription information of the terminal device. After receiving the first identifier and the first domain information, the NSN performs step S604 to step S606. Finally, the NSN obtains the subscription information of the terminal device, and feeds back the subscription information of the terminal device to the SMF network element.

In the method described in FIG. 6, the first network element determines the second network element based on the first domain information, and sends the first identifier to the second network element. Correspondingly, the second network element receives the first identifier from the first network element, and decrypts the first identifier, to obtain the second identifier, determine the third network element based on the second identifier, and obtain the data information of the terminal device from the third network element, in other words, determine the data information of the terminal device based on the second identifier, namely, the unencrypted identifier of the terminal device. This avoids a case in which a network element that manages the data information of the terminal device cannot be accurately determined based on a changed identifier of the terminal device when the identifier of the terminal device changes frequently. In addition, a manner in which the second network element and the third network element share the decryption method of the user identifier can avoid extra data overheads caused because encryption and decryption of the identifier of the terminal device are completed by a same network element and the network element that manages the data information that is of the terminal device and that corresponds to the identifier of the terminal device may need to be changed when the identifier of the terminal device changes, thereby reducing network overheads.

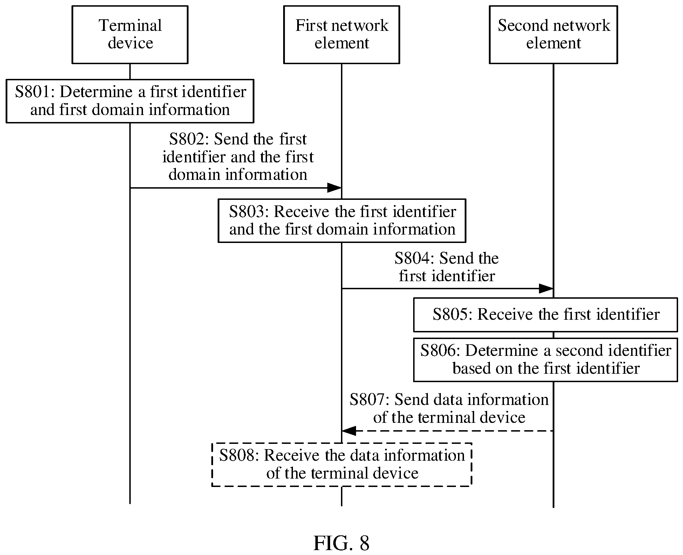

FIG. 8 shows a communication method according to an embodiment of this application. The method includes but is not limited to the following steps.

Step S801: A terminal device determines a first identifier and first domain information.

Specifically, the first identifier includes an encrypted identifier of the terminal device, and the first domain information indicates a domain in which a network element that manages data information of the terminal device is located. The network element that manages the data information of the terminal device is a second network element. In other words, this may be understood as that the first domain information indicates the network element that manages the data information of the terminal device and that is in a domain corresponding to the first identifier, that is, the first domain information indicates the second network element. The second network element may store the data information of the terminal device, or may obtain the data information of the terminal device from another network element.

For example, in an example, the first domain information includes identification information of the network element that manages the data information of the terminal device and that is in the domain corresponding to the first identifier. For example, the domain corresponding to the first identifier is a domain 1, and the network element that manages the data information of the terminal device is the second network element, that is, the first domain information includes identification information of the second network element. Optionally, the second network element is a USN. In other words, the first domain information includes identification information of the USN.

The first domain information may include the identification information of the network element that manages the data information of the terminal device, for example, the identification information of the USN or identification information of a UDM network element, and/or the first domain information corresponds to a group to which the terminal device belongs. For example, when an SUPI is initially allocated to a UDM, the UDM associates a value of a domain with a group to which a terminal device corresponding to the SUPI belongs.

Formats of the first identifier and the first domain information are shown in FIG. 7. When an identifier of the terminal device is an SUPI, correspondingly, the first identifier may be an SUPI*. When an identifier of the terminal device is a GUTI, correspondingly, the first identifier may be a GUTI*. When an identifier of the terminal device is an SUPI, correspondingly, the first identifier may alternatively be an SUCI. In this embodiment of this application, the encrypted identifier of the terminal device may be understood as an identifier that is of the terminal device and that is obtained through anonymization. The identifier of the terminal device may also be understood as a user identifier. This is not limited.

Specifically, the terminal device determines the first identifier and the first domain information in the following two manners. In a first manner, the terminal device obtains encryption information, and encrypts the identifier of the terminal device based on the encryption information, to determine the first identifier. In a second manner, the terminal device receives the first identifier and/or the first domain information. For details, refer to related descriptions in step S601.

Optionally, the first domain information may be carried in a field of the first identifier. Optionally, the first identifier and the first domain information may be carried in independent information elements.

Optionally, the first identifier and the first domain information may be carried in a NAS message. Optionally, the NAS message may be an access request message (for example, a registration request message or a service request message) of the terminal device or a request message for obtaining the data information of the terminal device.

Step S802: The terminal device sends the first identifier and the first domain information to a first network element.

Step S803: The first network element receives the first identifier and the first domain information.

Optionally, the first network element may be an NSN or a USN. The first network element may receive the first identifier and the first domain information from the terminal device, or the first network element receives the first identifier and the first domain information from another network element.

Step S804: The first network element sends the first identifier to the second network element.

Specifically, the second network element may be a USN. Before the first network element sends the first identifier to the second network element, the first network element performs hash processing on the first domain information, to determine the second network element.

Step S805: The second network element receives the first identifier from the first network element.

Step S806: The second network element determines a second identifier based on the first identifier.

Specifically, the second network element decrypts the first identifier, to obtain the second identifier, where the second identifier is the identifier of the terminal device, namely, an unencrypted identifier of the terminal device. For example, the first identifier includes an SUPI*, and the second network element decrypts the SUPI*, to obtain the second identifier SUPI. For example, the first identifier includes a GUTI*, and the second network element decrypts the GUTI*, to obtain the second identifier GUTI. For example, the first identifier includes an SUCI, and the second network element decrypts the GUTI*, to obtain the second identifier SUPI.

Step S807: The second network element sends the data information of the terminal device to the first network element.

This step is an optional step. Optionally, before the second network element sends the data information of the terminal device to the first network element, the second network element determines, based on the second identifier, the data information of the terminal device corresponding to the second identifier. Optionally, the data information of the terminal device may be subscription information of the terminal device or subscription data of the terminal device. The data information of the terminal device corresponding to the second identifier may be stored in the second network element or another network element. When the data information of the terminal device corresponding to the second identifier is stored in the another network element, for example, a network element configured to store data, for example, a UDR network element or a UDSF network element, the second network element may obtain, from the another network element, the data information of the terminal device corresponding to the second identifier.

Step S808: The first network element receives the data information of the terminal device from the second network element.

This step is an optional step.

In a possible implementation, after the first network element receives the data information of the terminal device from the second network element, the first network element sends a third message to the terminal device, where the third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier. The third identifier may be a GUTI, and the fourth identifier may be a GUTI*. For example, when the terminal device initially accesses a network, for example, registers with the network, or a network side needs to update a temporary identifier for the terminal device, the first network element (for example, a USN or a network element that provides a mobility management service for the terminal device) allocates a temporary identifier, for example, the third identifier, to the terminal device. Correspondingly, the terminal device receives the third identifier, the encryption information, and the second domain information from the first network element, then encrypts the third identifier based on the encryption information, to obtain the fourth identifier, and subsequently communicates with another network element by using the fourth identifier and the second domain information. Optionally, the first network element synchronously updates, with another network element, a mapping relationship between the fourth identifier and the identifier of the terminal device.

In another possible implementation, after the first network element receives the data information of the terminal device from the second network element, the first network element sends a fourth message to the terminal device, where the fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages data information of the terminal device corresponding to the fourth identifier and that is in a domain corresponding to the fourth identifier. The third identifier may be a GUTI, and the fourth identifier may be a GUTI*. For example, when the terminal device initially accesses a network, for example, registers with the network, or a network side needs to update a temporary identifier for the terminal device, the first network element (for example, a USN or a network element that provides a mobility management service for the terminal device) allocates an encrypted temporary identifier, for example, the fourth identifier, to the terminal device. Correspondingly, the terminal device receives the fourth identifier and the second domain information from the first network element, and subsequently communicates with another network element by using the fourth identifier and the second domain information. Optionally, the first network element synchronously updates, with another network element, a mapping relationship between the fourth identifier and the identifier of the terminal device.

In the method described in FIG. 8, the first network element performs hash processing on the first domain information, to determine the second network element, and then sends the first identifier to the second network element. Correspondingly, the second network element determines the second identifier based on the first identifier, to determine the data information of the terminal device, in other words, determine the data information of the terminal device based on the second identifier, namely, the unencrypted identifier of the terminal device. This avoids a case in which a network element that manages the data information of the terminal device cannot be accurately determined based on a changed identifier of the terminal device when the identifier of the terminal device changes frequently.

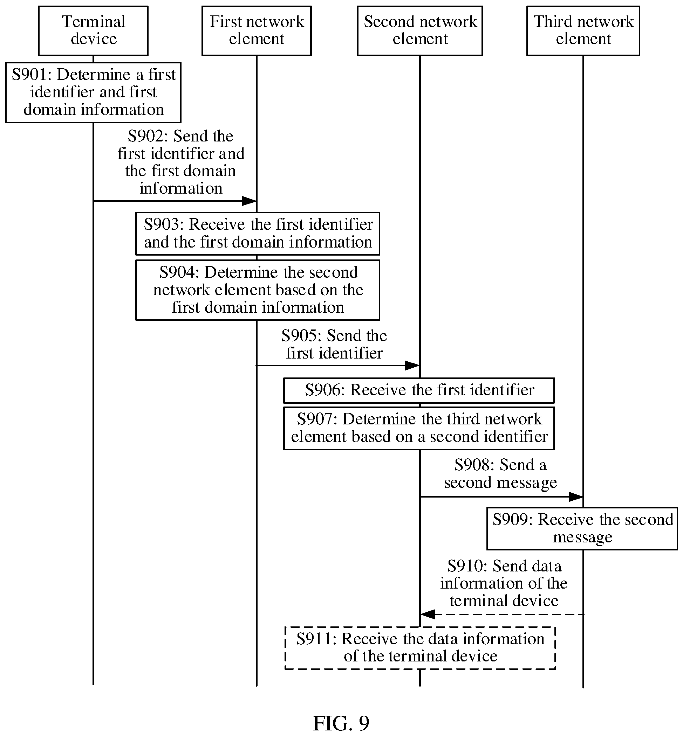

FIG. 9 shows a communication method according to an embodiment of this application. The method includes but is not limited to the following steps.

For step S901 to step S903, refer to step S601 to step S603. Details are not described herein again.

Step S904: The first network element determines a second network element based on the first domain information.

For details, refer to step S604.

For step S905 to step S907, refer to step S604 to step S606. Details are not described herein again.

Step S908: The second network element sends a second message to the third network element.

The second message is for sending an access request of the terminal device or a request for obtaining data information of the terminal device. For example, if the second network element sends the access request of the terminal device to the third network element, the third network element may determine, based on the data information of the terminal device, for example, subscription information of the terminal device, whether to allow access of the terminal device. For example, if the second network element sends the request for obtaining the data information of the terminal device to the third network element, the third network element sends the data information of the terminal device (for example, subscription information, context information, or policy information of the terminal device) to the second network element.

Step S909: The third network element receives the second message from the second network element.

Step S910: The third network element sends the data information of the terminal device to the second network element.

This step is an optional step.

Step S911: The second network element receives the data information of the terminal device from the third network element.

This step is an optional step.

In the method described in FIG. 9, the first network element determines the second network element based on the first domain information, and sends the first identifier to the second network element. Correspondingly, the second network element receives the first identifier from the first network element, and decrypts the first identifier, to obtain the second identifier, determine the third network element based on the second identifier, and obtain the data information of the terminal device from the third network element, in other words, determine the data information of the terminal device based on the second identifier, namely, an unencrypted identifier of the terminal device. This avoids a case in which a network element that manages the data information of the terminal device cannot be accurately determined based on a changed identifier of the terminal device when the identifier of the terminal device changes frequently. In addition, a manner in which the second network element and the third network element share a decryption method of a user identifier can avoid extra data overheads caused because encryption and decryption of the identifier of the terminal device are completed by a same network element and the network element that manages the data information that is of the terminal device and that corresponds to the identifier of the terminal device may need to be changed when the identifier of the terminal device changes, thereby reducing network overheads.

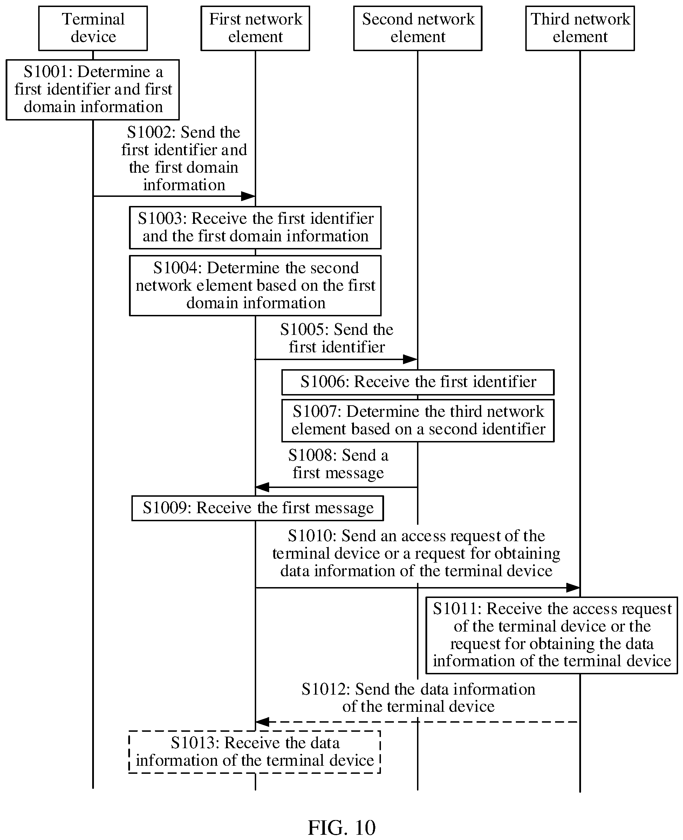

FIG. 10 shows a communication method according to an embodiment of this application. The method includes but is not limited to the following steps.

For step S1001 to step S1003, refer to step S601 to step S603. Details are not described herein again.

Step S 1004: The first network element determines a second network element based on the first domain information.

For details, refer to step S604.

For step S1005 to step S1007, refer to step S604 to step S606. Details are not described herein again.

Step S1008: The second network element sends a first message to the first network element.

The first message includes related information of the third network element, and the related information of the third network element includes address information of the third network element or identification information of the third network element.

Step S1009: The first network element receives the first message from the second network element.

Step S1010: The first network element sends an access request of the terminal device or a request for obtaining data information of the terminal device to the third network element.

Step S1011: The third network element receives, from the first network element, the access request of the terminal device or the request for obtaining the data information of the terminal device.

For example, if the first network element sends the access request of the terminal device to the third network element, the third network element may determine, based on the data information of the terminal device, for example, subscription information of the terminal device, whether to allow access of the terminal device. For example, if the first network element sends the request for obtaining the data information of the terminal device to the third network element, the third network element sends the data information of the terminal device (for example, subscription information, context information, or policy information of the terminal device) to the first network element.

Step S1012: The third network element sends the data information of the terminal device to the first network element.

This step is an optional step.

Step S1013: The first network element receives the data information of the terminal device from the third network element.

This step is an optional step.

In the method described in FIG. 10, the first network element determines the second network element based on the first domain information, and sends the first identifier to the second network element. Correspondingly, the second network element receives the first identifier from the first network element, and decrypts the first identifier, to obtain the second identifier, determine the third network element based on the second identifier, and obtain the data information of the terminal device from the third network element, in other words, determine the data information of the terminal device based on the second identifier, namely, an unencrypted identifier of the terminal device. This avoids a case in which a network element that manages the data information of the terminal device cannot be accurately determined based on a changed identifier of the terminal device when an identifier of the terminal device changes frequently. In addition, a manner in which the second network element and the third network element share a decryption method of a user identifier can avoid extra data overheads caused because encryption and decryption of the identifier of the terminal device are completed by a same network element and the network element that manages the data information that is of the terminal device and that corresponds to the identifier of the terminal device may need to be changed when the identifier of the terminal device changes, thereby reducing network overheads.

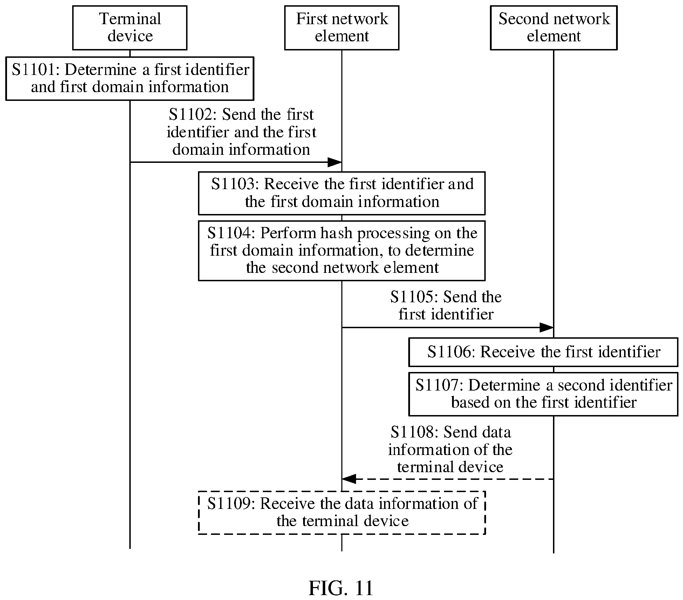

FIG. 11 shows a communication method according to an embodiment of this application. The method includes but is not limited to the following steps.

For step S1101 to step S1103, refer to step S801 to step S803. Details are not described herein again.

Step S1104: The first network element performs hash processing on the first domain information, to determine a second network element.

The first network element may be an NSN, and the second network element may be a USN. For details, refer to step S804.

For step S1105 to step S1109, refer to step S804 to step S808. Details are not described herein again.

In the method described in FIG. 11, the first network element performs hash processing on the first domain information, to determine the second network element, and then sends the first identifier to the second network element. Correspondingly, the second network element determines a second identifier based on the first identifier, to determine data information of the terminal device, in other words, determine the data information of the terminal device based on the second identifier, namely, an unencrypted identifier of the terminal device. This avoids a case in which a network element that manages the data information of the terminal device cannot be accurately determined based on a changed identifier of the terminal device when an identifier of the terminal device changes frequently.

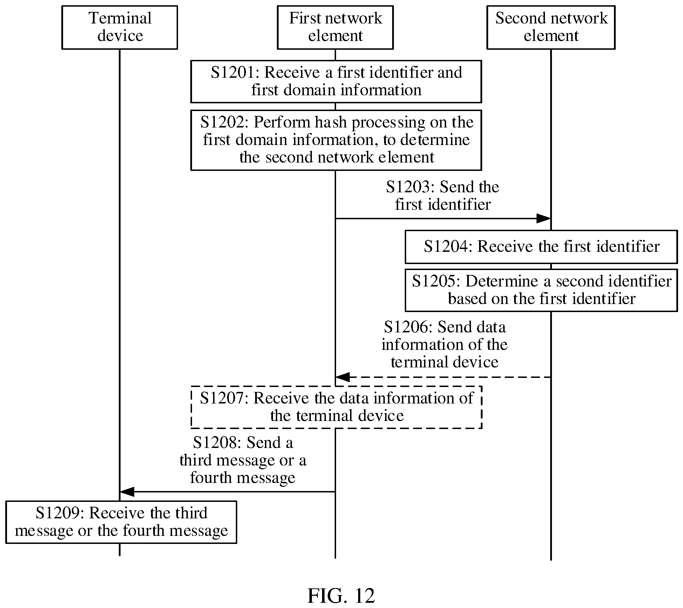

FIG. 12 shows a communication method according to an embodiment of this application. The method includes but is not limited to the following steps.

Step S1201: A first network element receives a first identifier and first domain information.

Optionally, the first network element may be a USN, and the first network element may receive the first identifier and the first domain information from a terminal device, or the first network element receives the first identifier and the first domain information from another network element, where the another network element may be an NSN.

Step S1202: The first network element performs hash processing on the first domain information, to determine a second network element.

Optionally, the second network element may be a USN. For details, refer to step S804.

For step S1203 to step S1207, refer to step S804 to step S808. Details are not described herein again.

Step S1208: The first network element sends a third message or a fourth message to the terminal device.

The third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier. For details, refer to related descriptions in step S808.

The fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier. For details, refer to related descriptions in step S808.

Step S1209: The terminal device receives the third message or the fourth message from the first network element.

In the method described in FIG. 12, the first network element performs hash processing on the first domain information, to determine the second network element, and then sends the first identifier to the second network element. Correspondingly, the second network element determines the second identifier based on the first identifier, to determine the data information of the terminal device, in other words, determine the data information of the terminal device based on the second identifier, namely, an unencrypted identifier of the terminal device. This avoids a case in which a network element that manages the data information of the terminal device cannot be accurately determined based on a changed identifier of the terminal device when an identifier of the terminal device changes frequently.

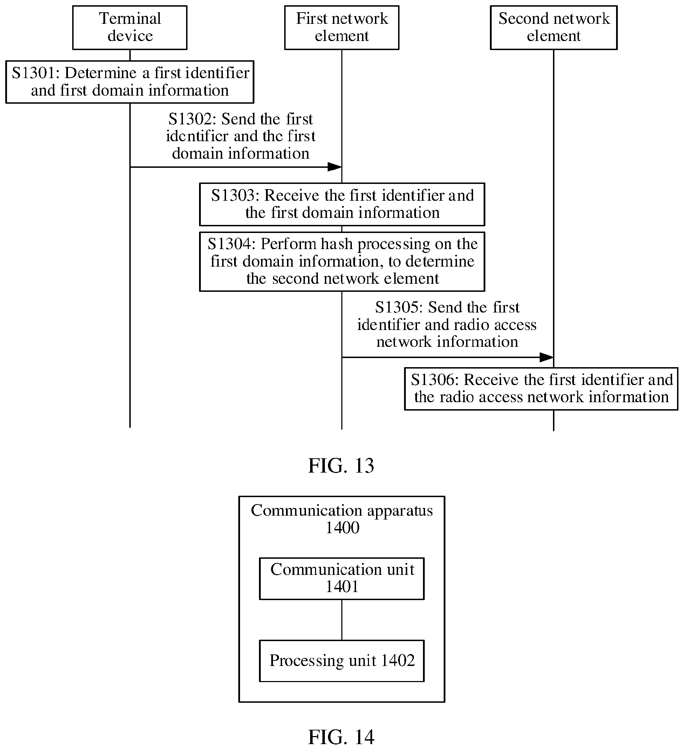

FIG. 13 shows a communication method according to an embodiment of this application. The method includes but is not limited to the following steps.

For step S1301 to step S1303, refer to step S801 to step S803. Details are not described herein again.

Step S1304: The first network element performs hash processing on the first domain information, to determine a second network element.

The first network element may be an NSN, and the second network element may be a USN. For details, refer to step S804.

Step S1305: The first network element sends the first identifier and radio access network information to the second network element.

The radio access network (radio access network, RAN) information may include identification information and/or address information, for example, an IP address, a port number, and a uniform resource locator (uniform resource locator, URL), of a radio access network element.

Step S1306: The second network element receives the first identifier and the radio access network information from the first network element.

Specifically, after the second network element receives the first identifier from the first network element, the second network element decrypts the first identifier, to obtain a second identifier, where the second identifier is an identifier of the terminal device, namely, an unencrypted identifier of the terminal device. For example, the first identifier includes an SUPI*, and the second network element decrypts the SUPI*, to obtain the second identifier SUPI.

Specifically, after receiving the radio access network information from the first network element, the second network element may establish a connection with a radio access network based on the radio access network information.

In a possible implementation, the second network element sends a third message to the terminal device, where the third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages data information of the terminal device corresponding to the fourth identifier and that is in a domain corresponding to the fourth identifier. The third identifier may be a GUTI, and the fourth identifier may be a GUTI*. For example, when the terminal device initially accesses a network, for example, registers with the network, or a network side needs to update a temporary identifier for the terminal device, the second network element (for example, a USN or a network element that provides a mobility management service for the terminal device) allocates a temporary identifier, for example, the third identifier, to the terminal device. Correspondingly, the terminal device receives the third identifier, the encryption information, and the second domain information from the second network element, then encrypts the third identifier based on the encryption information, to obtain the fourth identifier, and subsequently communicates with another network element by using the fourth identifier and the second domain information. Optionally, the second network element synchronously updates, with another network element, a mapping relationship between the fourth identifier and the identifier of the terminal device.

In another possible implementation, the second network element sends a fourth message to the terminal device, where the fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages data information of the terminal device corresponding to the fourth identifier and that is in a domain corresponding to the fourth identifier. The third identifier may be a GUTI, and the fourth identifier may be a GUTI*. For example, when the terminal device initially accesses a network, for example, registers with the network, or a network side needs to update a temporary identifier for the terminal device, the second network element (for example, a USN or a network element that provides a mobility management service for the terminal device) allocates an encrypted temporary identifier, for example, the fourth identifier, to the terminal device. Correspondingly, the terminal device receives the fourth identifier and the second domain information from the second network element, and subsequently communicates with another network element by using the fourth identifier and the second domain information. Optionally, the second network element synchronously updates, with another network element, a mapping relationship between the fourth identifier and the identifier of the terminal device.

In the method described in FIG. 13, the first network element performs hash processing on the first domain information, to determine the second network element, and then sends the first identifier to the second network element. Correspondingly, the second network element determines the second identifier based on the first identifier, to determine the data information of the terminal device, in other words, determine the data information of the terminal device based on the second identifier, namely, an unencrypted identifier of the terminal device. This avoids a case in which a network element that manages the data information of the terminal device cannot be accurately determined based on a changed identifier of the terminal device when an identifier of the terminal device changes frequently.

The methods in embodiments of this application are described in detail above. Apparatuses in embodiments of this application are provided below.

FIG. 14 is a diagram of a structure of a communication apparatus 1400 according to an embodiment of this application. The communication apparatus 1400 may include a communication unit 1401 and a processing unit 1402. Descriptions of the units are described in detail below. The processing unit 1402 is configured to determine a first identifier and first domain information, where the first identifier includes an encrypted identifier of a terminal device, and the first domain information indicates a domain in which a network element that manages data information of the terminal device is located. The communication unit 1401 is configured to send the first identifier and the first domain information to a first network element.

In a possible implementation, the first domain information is carried in a field of the first identifier.

In another possible implementation, the first domain information corresponds to a group to which the apparatus belongs.

In another possible implementation, the processing unit 1402 is configured to obtain encryption information; and the processing unit 1402 is configured to encrypt an identifier of the terminal device based on the encryption information, to determine the first identifier.

In another possible implementation, the communication unit 1401 is configured to receive the first identifier and/or the first domain information.

In another possible implementation, the first identifier further explicitly includes an identifier of a third network element, or further implicitly includes an identifier that is of a third network element and that is determined based on a mapping relationship between the identifier of the terminal device and the identifier of the third network element.

In another possible implementation, the network element that manages the data information of the terminal device is a second network element.

It should be noted that, for implementation and beneficial effects of the units, refer to corresponding descriptions of the method embodiment shown in FIG. 6, FIG. 8, FIG. 9, FIG. 10, FIG. 11, FIG. 12, or FIG. 13.

Optionally, detailed descriptions of the units in the communication apparatus 1400 may further be as follows: The communication unit 1401 is configured to receive a first identifier, where the first identifier includes an encrypted identifier of a terminal device. The processing unit 1402 is configured to determine a third network element based on a second identifier, where the second identifier is obtained by decrypting the first identifier, and the third network element is configured to determine data information of the terminal device corresponding to the second identifier.

In a possible implementation, the first identifier further explicitly includes an identifier of the third network element, or further implicitly includes an identifier that is of the third network element and that is determined based on a mapping relationship between an identifier of the terminal device and the identifier of the third network element.

In another possible implementation, the processing unit 1402 is configured to determine related information of the third network element based on the second identifier, where the related information of the third network element includes address information of the third network element or identification information of the third network element. The communication unit 1401 is configured to send a first message to a first network element, where the first message includes the related information of the third network element, and the related information of the third network element is for determining the third network element.

In another possible implementation 1401, the communication unit is further configured to send a second message to the third network element, where the second message is for sending an access request of the terminal device or a request for obtaining the data information of the terminal device.

In another possible implementation, when the apparatus and the third network element belong to a same domain, the apparatus and the third network element share decryption information of a user identifier.

It should be noted that, for implementation and beneficial effects of the units, refer to corresponding descriptions of the method embodiment shown in FIG. 6, FIG. 9, or FIG. 10.

Optionally, detailed descriptions of the units in the communication apparatus 1400 may further be as follows: The communication unit 1401 is configured to receive a first identifier and first domain information, where the first identifier includes an encrypted identifier of a terminal device, and the first domain information indicates a domain in which a network element that manages data information of the terminal device is located. The communication unit 1401 is configured to send the first identifier to a second network element.

In a possible implementation, the first domain information is carried in a field of the first identifier.

In another possible implementation, the first domain information corresponds to a group to which the terminal device belongs.

In another possible implementation, the first domain information includes identification information or address information of the domain in which the network element that manages the data information of the terminal device is located.

In another possible implementation, the first identifier further explicitly includes an identifier of a third network element, or further implicitly includes an identifier that is of a third network element and that is determined based on a mapping relationship between an identifier of the terminal device and the identifier of the third network element.

In another possible implementation, the communication unit 1401 is further configured to receive a first message from the second network element, where the first message includes related information of a third network element, and the related information of the third network element includes address information of the third network element or identification information of the third network element. The communication unit 1401 is further configured to send a second message to the third network element based on the first message, where the second message is for sending an access request of the terminal device or a request for obtaining the data information of the terminal device.

In another possible implementation, the network element that manages the data information of the terminal device is the second network element.

In another possible implementation, the processing unit 1402 is further configured to perform hash processing on the first domain information, to determine the second network element.

In another possible implementation, the communication unit 1401 is configured to receive the first identifier and the first domain information from the terminal device.

In another possible implementation, the communication unit 1401 is further configured to receive the data information of the terminal device from the second network element.

In another possible implementation, the communication unit 1401 is further configured to send a third message to the terminal device, where the third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

In another possible implementation, the communication unit 1401 is further configured to send a fourth message to the terminal device, where the fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

It should be noted that, for implementation and beneficial effects of the units, refer to corresponding descriptions of the method embodiment shown in FIG. 6, FIG. 8, FIG. 9, FIG. 10, FIG. 11, FIG. 12, or FIG. 13.

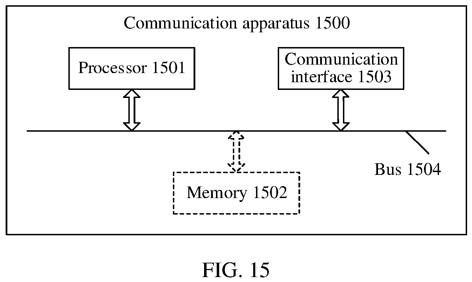

FIG. 15 shows a communication apparatus 1500 according to an embodiment of this application. The communication apparatus 1500 includes at least one processor 1501 and a communication interface 1503, and optionally, further includes a memory 1502. The processor 1501, the memory 1502, and the communication interface 1503 are connected to each other by using a bus 1504. Optionally, the processor 1501 and the memory 1502 may be integrated together.

The memory 1502 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1502 is configured to store related computer programs and data. The communication interface 1503 is configured to receive and send data.

The processor 1501 may be one or more central processing units (central processing units, CPUs). When the processor 1501 is one CPU, the CPU may be a single-core CPU, or may be a multi-core CPU.

The processor 1501 in the communication apparatus 1500 is configured to read computer program code stored in the memory 1502, to perform the following operations: determining a first identifier and first domain information, where the first identifier includes an encrypted identifier of a terminal device, and the first domain information indicates a domain in which a network element that manages data information of the terminal device is located; sending the first identifier and the first domain information to a first network element through the communication interface 1503.

In a possible implementation, the first domain information is carried in a field of the first identifier.

In another possible implementation, the first domain information corresponds to a group to which the apparatus belongs.

In another possible implementation, the processor 1501 is configured to: obtain encryption information; and encrypt an identifier of the terminal device based on the encryption information, to determine the first identifier.

In another possible implementation, the processor 1501 is configured to receive the first identifier and/or the first domain information through the communication interface 1503.

In another possible implementation, the first identifier further explicitly includes an identifier of a third network element, or further implicitly includes an identifier that is of a third network element and that is determined based on a mapping relationship between the identifier of the terminal device and the identifier of the third network element.

In another possible implementation, the network element that manages the data information of the terminal device is a second network element.

It should be noted that, for implementation and beneficial effects of the operations, refer to corresponding descriptions of the method embodiment shown in FIG. 6, FIG. 8, FIG. 9, FIG. 10, FIG. 11, FIG. 12, or FIG. 13.

Optionally, the processor 1501 in the communication apparatus 1500 is configured to read computer program code stored in the memory 1502, to perform the following operations: receiving a first identifier through the communication interface 1503, where the first identifier includes an encrypted identifier of a terminal device; and determining a third network element based on a second identifier, where the second identifier is obtained by decrypting the first identifier, and the third network element is configured to determine data information of the terminal device corresponding to the second identifier.

In a possible implementation, the first identifier further explicitly includes an identifier of the third network element, or further implicitly includes an identifier that is of the third network element and that is determined based on a mapping relationship between an identifier of the terminal device and the identifier of the third network element.

In another possible implementation, the processor 1501 is configured to: determine related information of the third network element based on the second identifier, where the related information of the third network element includes address information of the third network element or identification information of the third network element; and send a first message to a first network element through the communication interface 1503, where the first message includes related information of the third network element, and the related information of the third network element is for determining the third network element.

In another possible implementation, the processor 1501 is further configured to send a second message to the third network element through the communication interface 1503, where the second message is for sending an access request of the terminal device or a request for obtaining the data information of the terminal device.

In another possible implementation, when the apparatus and the third network element belong to a same domain, the apparatus and the third network element share decryption information of a user identifier.

It should be noted that, for implementation and beneficial effects of the operations, refer to corresponding descriptions of the method embodiment shown in FIG. 6, FIG. 9, or FIG. 10.

Optionally, the processor 1501 in the communication apparatus 1500 is configured to read computer program code stored in the memory 1502, to perform the following operations: receiving a first identifier and first domain information through the communication interface 1503, where the first identifier includes an encrypted identifier of a terminal device, and the first domain information indicates a domain in which a network element that manages data information of the terminal device is located; and sending the first identifier to a second network element through the communication interface 1503.

In a possible implementation, the first domain information is carried in a field of the first identifier.

In another possible implementation, the first domain information corresponds to a group to which the terminal device belongs.

In another possible implementation, the first domain information includes identification information or address information of the domain in which the network element that manages the data information of the terminal device is located.

In another possible implementation, the first identifier further explicitly includes an identifier of a third network element, or further implicitly includes an identifier that is of a third network element and that is determined based on a mapping relationship between an identifier of the terminal device and the identifier of the third network element.

In another possible implementation, the processor 1501 is further configured to: receive a first message from the second network element through the communication interface 1503, where the first message includes related information of the third network element, and the related information of the third network element includes address information of the third network element or identification information of the third network element; and send a second message to the third network element based on the first message, where the second message is for sending an access request of the terminal device or a request for obtaining the data information of the terminal device.

In another possible implementation, the network element that manages the data information of the terminal device is the second network element.

In another possible implementation, the processor 1501 is further configured to perform hash processing on the first domain information, to determine the second network element.

In another possible implementation, the processor 1501 is configured to receive the first identifier and the first domain information from the terminal device through the communication interface 1503.

In another possible implementation, the processor 1501 is further configured to receive the data information of the terminal device from the second network element through the communication interface 1503.

In another possible implementation, the processor 1501 is further configured to send a third message to the terminal device through the communication interface 1503, where the third message includes a third identifier, encryption information, and second domain information, the encryption information indicates a method used by the terminal device to encrypt the third identifier to obtain a fourth identifier, the third identifier is an unencrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

In another possible implementation, the processor 1501 is further configured to send a fourth message to the terminal device through the communication interface 1503, where the fourth message includes a fourth identifier and second domain information, the fourth identifier is obtained by encrypting a third identifier, the third identifier is an unencrypted temporary identifier of the terminal device, the fourth identifier is an encrypted temporary identifier of the terminal device, the fourth identifier is used by the terminal device to perform communication, and the second domain information indicates a network element that manages the data information of the terminal device corresponding to the fourth identifier and that is in a domain corresponding to the fourth identifier.

It should be noted that, for implementation and beneficial effects of the operations, refer to corresponding descriptions of the method embodiment shown in FIG. 6, FIG. 8, FIG. 9, FIG. 10, FIG. 11, FIG. 12, or FIG. 13.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In descriptions of this application, terms such as "first", "second", "S601", or "S602" are merely used for distinguishing and description and for ease of organizing this specification. Different sequences or numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns indicates "a singular noun or a plural noun", that is, "one or more". "At least one" indicates one or more. "At least one of the following: A, B, and C is included" may indicate that A is included, B is included, C is included, A and B are included, A and C are included, B and C are included, or A, B, and C are included, where A, B, and C may be singular or plural.

## Claims

1. A communication method, comprising:
determining, by a first communication apparatus, a first identifier and first domain information, wherein the first identifier comprises an encrypted identifier of the first communication apparatus, and the first domain information indicates a domain in which a network element that manages data information of the first communication apparatus is located; and
sending, by the first communication apparatus, the first identifier and the first domain information to a third communication apparatus.

2. The method according to claim 1, wherein
the first domain information is carried in a field of the first identifier.

3. The method according to claim 1 or 2, wherein the first domain information corresponds to a group to which the first communication apparatus belongs.

4. The method according to any one of claims 1 to 3, wherein the determining, by a first communication apparatus, a first identifier comprises:
obtaining, by the first communication apparatus, encryption information; and
encrypting, by the first communication apparatus, an identifier of the first communication apparatus based on the encryption information, to determine the first identifier.

5. The method according to any one of claims 1 to 3, wherein the determining, by a first communication apparatus, a first identifier and first domain information comprises:
receiving, by the first communication apparatus, the first identifier and/or the first domain information.

6. The method according to any one of claims 1 to 5, wherein the first identifier further explicitly comprises an identifier of a third network element; or further implicitly comprises an identifier that is of a third network element and that is determined based on a mapping relationship between the identifier of the first communication apparatus and the identifier of the third network element.

7. The method according to any one of claims 1 to 5, wherein
the network element that manages the data information of the first communication apparatus is a second communication apparatus.

8. A communication method, comprising:
receiving, by a second communication apparatus, a first identifier, wherein the first identifier comprises an encrypted identifier of a first communication apparatus; and
determining, by the second communication apparatus, a third network element based on a second identifier, wherein the second identifier is obtained by decrypting the first identifier, and the third network element is configured to determine data information of the first communication apparatus corresponding to the second identifier.

9. The method according to claim 8, wherein
the first identifier further explicitly comprises an identifier of the third network element; or further implicitly comprises an identifier that is of the third network element and that is determined based on a mapping relationship between an identifier of the first communication apparatus and the identifier of the third network element.

10. The method according to claim 8 or 9, wherein the determining, by the second communication apparatus, a third network element based on a second identifier comprises:
determining, by the second communication apparatus, related information of the third network element based on the second identifier, wherein the related information of the third network element comprises address information of the third network element or identification information of the third network element; and
sending, by the second communication apparatus, a first message to a third communication apparatus, wherein the first message comprises the related information of the third network element, and the related information of the third network element is for determining the third network element.

11. The method according to claim 8 or 9, wherein the method further comprises:
sending, by the second communication apparatus, a second message to the third network element, wherein the second message is for sending an access request of the first communication apparatus or a request for obtaining the data information of the first communication apparatus.

12. The method according to any one of claims 8 to 11, wherein
when the second communication apparatus and the third network element belong to a same domain, decryption information of a user identifier is shared between the second communication apparatus and the third network element,.

13. A communication method, comprising:
receiving, by a third communication apparatus, a first identifier and first domain information, wherein the first identifier comprises an encrypted identifier of a first communication apparatus, and the first domain information indicates a domain in which a network element that manages data information of the first communication apparatus is located; and
sending, by the third communication apparatus, the first identifier to a second communication apparatus.

14. The method according to claim 13, wherein
the first domain information is carried in a field of the first identifier.

15. The method according to claim 13 or 14, wherein the first domain information corresponds to a group to which the first communication apparatus belongs.

16. The method according to any one of claims 13 to 15, wherein the first domain information comprises identification information or address information of the domain in which the network element that manages the data information of the first communication apparatus is located.

17. The method according to any one of claims 13 to 16, wherein the first identifier further explicitly comprises an identifier of a third network element; or further implicitly comprises an identifier that is of a third network element and that is determined based on a mapping relationship between an identifier of the first communication apparatus and the identifier of the third network element.

18. The method according to any one of claims 13 to 17, wherein the method further comprises:
receiving, by the third communication apparatus, a first message from the second communication apparatus, wherein the first message comprises related information of the third network element, and the related information of the third network element comprises address information of the third network element or identification information of the third network element; and
sending, by the third communication apparatus, a second message to the third network element based on the first message, wherein the second message is for sending an access request of the first communication apparatus or a request for obtaining the data information of the first communication apparatus.

19. The method according to any one of claims 13 to 16, wherein
the network element that manages the data information of the first communication apparatus is the second communication apparatus.

20. The method according to claim 19, wherein the method further comprises:
performing, by the third communication apparatus, hash processing on the first domain information, to determine the second communication apparatus.

21. The method according to any one of claims 13 to 16, wherein the receiving, by a third communication apparatus, a first identifier and first domain information comprises:
receiving, by the third communication apparatus, the first identifier and the first domain information from the first communication apparatus.

22. The method according to any one of claims 19 to 21, wherein the method further comprises:
receiving, by the third communication apparatus, the data information of the first communication apparatus from the second communication apparatus.

23. The method according to any one of claims 19 to 22, wherein the method further comprises:
sending, by the third communication apparatus, a third message to the first communication apparatus, wherein the third message comprises a third identifier, encryption information, and second domain information, the encryption information indicates a method used by the first communication apparatus to encrypt the third identifier to obtain a fourth identifier, the third identifier is an unencrypted temporary identifier of the first communication apparatus, the fourth identifier is used by the first communication apparatus to perform communication, and the second domain information indicates a network element that manages the data information of the first communication apparatus corresponding to the fourth identifier and that is in a domain corresponding to the fourth identifier.

24. The method according to any one of claims 19 to 22, wherein the method further comprises:
sending, by the third communication apparatus, a fourth message to the first communication apparatus, wherein the fourth message comprises a fourth identifier and second domain information, the fourth identifier is obtained by encrypting a third identifier, the third identifier is an unencrypted temporary identifier of the first communication apparatus, the fourth identifier is an encrypted temporary identifier of the first communication apparatus, the fourth identifier is used by the first communication apparatus to perform communication, and the second domain information indicates a network element that manages the data information of the first communication apparatus corresponding to the fourth identifier and that is in a domain corresponding to the fourth identifier.

25. A communication apparatus, comprising a communication unit and a processing unit, wherein
the processing unit is configured to determine a first identifier and first domain information, wherein the first identifier comprises an encrypted identifier of a first communication apparatus, and the first domain information indicates a domain in which a network element that manages data information of the first communication apparatus is located; and
the communication unit is configured to send the first identifier and the first domain information to a third communication apparatus.

26. The apparatus according to claim 25, wherein
the first domain information is carried in a field of the first identifier.

27. The apparatus according to claim 25 or 26, wherein the first domain information corresponds to a group to which the apparatus belongs.

28. The apparatus according to any one of claims 25 to 27, wherein
the processing unit is configured to obtain encryption information; and
the processing unit is configured to encrypt an identifier of the first communication apparatus based on the encryption information, to determine the first identifier.

29. The apparatus according to any one of claims 25 to 27, wherein
the communication unit is configured to receive the first identifier and/or the first domain information.

30. The apparatus according to any one of claims 25 to 29, wherein the first identifier further explicitly comprises an identifier of a third network element; or further implicitly comprises an identifier that is of a third network element and that is determined based on a mapping relationship between the identifier of the first communication apparatus and the identifier of the third network element.

31. The apparatus according to any one of claims 25 to 29, wherein
the network element that manages the data information of the first communication apparatus is a second communication apparatus.

32. A communication apparatus, comprising a communication unit and a processing unit, wherein
the communication unit is configured to receive a first identifier, wherein the first identifier comprises an encrypted identifier of a first communication apparatus; and
the processing unit is configured to determine a third network element based on a second identifier, wherein the second identifier is obtained by decrypting the first identifier, and the third network element is configured to determine data information of the first communication apparatus corresponding to the second identifier.

33. A communication apparatus, comprising a communication unit and a processing unit, wherein
the communication unit is configured to receive a first identifier and first domain information, wherein the first identifier comprises an encrypted identifier of a first communication apparatus, and the first domain information indicates a domain in which a network element that manages data information of the first communication apparatus is located; and
the communication unit is configured to send the first identifier to a second communication apparatus.

34. A communication apparatus, wherein the communication apparatus comprises at least one processor and an interface circuit, and the at least one processor invokes a computer program or instructions stored in a memory, to perform the method according to any one of claims 1 to 7, the method according to any one of claims 8 to 12, or the method according to any one of claims 13 to 24.

35. A computer-readable storage medium, wherein the computer-readable storage medium stores instructions, and when the instructions are run on a processor, the method according to any one of claims 1 to 24 is implemented.

36. A computer program product, wherein the computer program product comprises computer program code, and when the computer program code is run on a computer, the method according to any one of claims 1 to 24 is performed.

37. A communication system, comprising a first communication apparatus, a second communication apparatus, and a third communication apparatus, wherein the first communication apparatus is configured to implement the method according to any one of claims 1 to 7, the second communication apparatus is configured to implement the method according to any one of claims 8 to 12, and the third communication apparatus is configured to implement the method according to any one of claims 13 to 24.
